# EUROPEAN PATENT SPECIFICATION

(11) **EP 2 300 244 B1**
(45) Date of publication and mention of the grant of the patent: **14.12.2011**
(21) Application number: 08774513.9
(22) Date of filing: 30.06.2008
(51) Int. Cl.: B60C 1/00, C08K 3/36, C08K 5/09, C08K 5/1525, C08L 9/00, C08L 9/06, C08L 21/00

(54) **TYRE AND CROSSLINKABLE ELASTOMERIC COMPOSITION COMPRISING AN OXETANE DERIVATIVE AND A CARBOXYLIC ACID**
REIFEN UND EIN OXETANDERIVAT UND EINE CARBONSÄURE UMFASSENDE VERNETZBARE ELASTOMERZUSAMMENSETZUNG
PNEU ET COMPOSITION ÉLASTOMÈRE RÉTICULABLE COMPRENANT UN DÉRIVÉ DE L'OXETANE ET UN ACIDE CARBOXYLIQUE

(43) Date of publication of application: 30.03.2011
(73) Proprietor: Pirelli Tyre S.P.A., 20126 Milan (IT)
(72) Inventor: ROSSIELLO, Luigia, I-20126 Milano (IT); CAPRIO, Michela, I-20126 Milano (IT); NAHMIAS NANNI, Marco, I-20126 Milano (IT)
(74) Representative: Allaix, Roberto
(86) International application number: PCT/EP2008/058359
(87) International publication number: WO 2010/000294

(56) References cited:
- EP-A- 0 776 934
- EP-A- 1 754 750
- JP-A- 2004 323 564

## Description

### Field of the invention

The present invention generally relates to a tyre and to a crosslinkable elastomeric composition comprising an oxetane derivative and a carboxylic acid.

More in particular, the present invention relates to a tyre including at least one structural element obtained by crosslinking a crosslinkable elastomeric composition comprising an oxetane derivative and a carboxylic acid preferably having the general formulas described hereinbelow.

Moreover, the present invention also relates to a crosslinkable elastomeric composition comprising an oxetane derivative and a carboxylic acid, as well as to a crosslinked manufactured article obtained by crosslinking said crosslinkable elastomeric composition.

### Background of the invention

In the rubber industry, in particular that of tyres manufacturing, it is known practice to use additives with the crosslinkable elastomeric compositions to improve the performances of the finished product (i.e. the crosslinked manufactured product).

For example, static and dynamic moduli of the elastomeric compositions may be increased by using a large amount of carbon black, or a very fine and structured carbon black. However, the above ways of increasing static and dynamic moduli may lead to a number of drawbacks.

It is known that carbon black gives the crosslinked manufactured product pronounced hysteresis properties, that is to say an increase in the dissipated heat under dynamic conditions, which results in an increase in the rolling resistance of the tyre and the fuel consumption. In addition, a large amount of carbon black causes an increase in the viscosity of the elastomeric composition and, consequently, has a negative impact on the processability and extrudability of the crosslinkable elastomeric composition.

To overcome the drawbacks caused by the use of carbon black, the so-called "white" reinforcing fillers are usually employed, in particular silica, in partial or total replacement for the carbon black.

However, although the use of said white reinforcing fillers leads to good tear resistance, it also entails a series of drawbacks essentially related to the poor affinity of these fillers with respect to the elastomeric polymers commonly used in the production of tyres. In particular, to obtain a good degree of dispersion of the silica in the elastomeric polymers, it is necessary to subject the elastomeric compositions to a prolonged thermo mechanical blending action.

Moreover, in addition to high tear resistance and low rolling resistance, a finished tyre needs to have a good adherence to both dry and wet roads. These characteristics are widely dependent from the viscoelastic properties of the crosslinkable elastomeric compositions used in the manufacturing of the tyre.

Conventionally, mixtures of different kinds of natural and synthetic rubbers, such as, for example, mixtures of styrene-butadiene rubber and polybutadiene rubber, are used in the manufacture of tyre in order to get a good balance of the above mentioned tyre requirements.

Japanese Patent Application JP2004/323564 discloses a rubber composition for vulcanization comprising (a) an epihalohydrin rubber, (b) an oxetane compound, (c) an acid acceptor, and (d) a vulcanizing agent. The composition is said to provide a epihalohydrin rubber composition for vulcanization having improved heat resistance.

GB Patent Specification No. 1.033.288 discloses a rubber composition comprising cis-1,4-polybutadiene and between 2.5 and 10 parts per 100 polybutadiene of thiolbenzoic acid.

US Patent No. 5,804,619 discloses a rubber composition comprising functionalized elastomers comprising grafted carboxyl or ester groups derived from thio compounds or disulphide compounds.

U.S. Pat. No. 4,513,123 discloses a sulfur-curable rubber skim stock which upon curing exhibits improved adhesion to brass-plated steel under high humidity, heat aging conditions. The sulfur-curable rubber skim stock comprises natural rubber or a blend of natural rubber and synthetic rubber, carbon black, an organo-cobalt compound, sulfur and a small amount of dithio-dipropionic acid.

U.S. Pat. No. 4,851,469 to Saitoh discloses the use of a combination of silica, a resorcin donor, a methylene donor and an organic sulfur-containing compound to improve the adhesion of sulfur-vulcanizable rubber to brass.

U.S. Pat. No. 5,085,905 to Beck discloses an elastomeric composition having improved adhesion to metal reinforcement, the elastomeric composition comprising an elastomer containing an adhesion promoting amount of a polysulfide.

U.S. Pat. No. 5,394,919 to Sandstrom et al. discloses a laminate of rubber and steel cord, which may be brass coated steel, where the rubber comprises an elastomer, carbon black, optionally silica, dithio-dipropionic acid and methylene donor material. The combination of dithiodipropionic acid, carbon black, optionally silica, and the methylene donor is described to enhance the rubber adhesion to cord.

### Summary of the invention

The Applicant has faced the problem of improving the viscoelastic properties of crosslinkable elastomeric compositions comprising reinforcing agents in such a way to obtain a finished tyre having a low rolling resistance and a high tear resistance together with good adherence to both dry and wet surfaces.

The Applicant has found that the above mentioned problem may be overcome by adding to the crosslinkable elastomeric compositions which may be advantageously used in the production of crosslinked manufactured products, in particular in the manufacturing of tyres, at least one oxetane derivative and at least one carboxylic acid, preferably having given general formulas which will be better specified hereinbelow, said carboxylic acid preferably comprising a substituent group able to react with at least one polymer of said crosslinkable elastomeric compositions.

In particular, the Applicant has found that the addition of said at least one oxetane derivative and at least one carboxylic acid to the crosslinkable elastomeric compositions allows to obtain crosslinked manufactured products showing substantially unaltered or even improved mechanical properties.

In particular, the Applicant has found that the addition of said at least one oxetane derivative and at least one carboxylic acid to the crosslinkable elastomeric compositions allows to obtain crosslinked manufactured products having an increased tensile modulus, and then an increased stiffness of the finished tyre with a better adherence to dry road.

Moreover, the Applicant has found that the addition of said at least one oxetane derivative and at least one carboxylic acid to the crosslinkable elastomeric compositions does not increase the viscosity of the crosslinkable elastomeric compositions, which maintains a good flowability during the manufacturing, in particular during the manufacturing of the green tyres.

Moreover, the Applicant has also found that the addition of said at least one oxetane derivative and at least one carboxylic acid to the crosslinkable elastomeric compositions allows to obtain crosslinked manufactured products showing a higher loss tangent (tan δ) at low temperatures and a lower loss tangent (tan δ) at high temperatures, and thus a better adherence to wet surfaces and a lower rolling resistance.

Without to be restricted to any specific hypothesis, the Applicant believes that the surprising results obtained by the addition of said at least one oxetane derivative and at least one carboxylic acid to the crosslinkable elastomeric compositions of the invention are due to the ring-opening reactions between the oxetane derivative and the carboxylic acid leading to addition products (like 1:1 addition products, but also linear or branched oligomers and/or polymers) probably able to further react with the elastomeric polymers of the elastomeric compositions during the vulcanization process and to confer the unexpected combination of properties to the resulting crosslinked manufactured products.

Accordingly, in a first aspect, the present invention relates to a tyre comprising at least one structural element including a crosslinked elastomeric material obtained by crosslinking a crosslinkable elastomeric composition comprising:
(a) 100 phr of at least one elastomeric polymer;
(b) from about 0.1 phr to about 120 phr, preferably from about 20 phr to about 90 phr, of at least one reinforcing filler;
(c) from about 0.01 phr to about 20 phr, preferably from about 0.1 phr to about 10 phr, of at least one oxetane derivative, said oxetane derivative preferably having the following general formula (I): 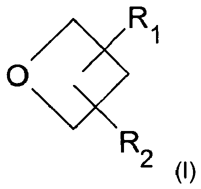 wherein
   R₁ is a linear or branched alkyl group having from 1 to 6 carbon atoms, or a linear or branched alkylaryl group having from 7 to 12 carbon atoms, and
   R₂ is a linear or branched alkyl group having from 1 to 6 carbon atoms, or a linear or branched alkylaryl group having from 7 to 12 carbon atoms, optionally comprising one or more substituent selected from the group of halide, hydroxy, alkoxy, haloalkoxy, amino, nitro, thio, cyano, acyl and acyloxy.
(d) from about 0.01 phr to about 10 phr, preferably from about 0.1 phr to about 5 phr, of at least one carboxylic acid, or a derivative thereof, wherein said carboxylic acid preferably has the following general formula (II): 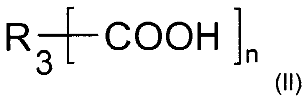 wherein R₃ is an n-valent aliphatic or aromatic organic group having up to 24 carbon atoms, and n is 1 or 2, and wherein said derivative is selected from the group of halides and anhydrides of said carboxylic acid having general formula (II).

According to one preferred embodiment, said tyre comprises:
- a carcass structure of a substantially toroidal shape, having opposite lateral edges associated with respective right-hand and left-hand bead structures defined by respective carcass turn-up, said bead structures comprising at least one bead core and at least one bead filler;
- a belt structure applied in a radially external position with respect to said carcass structure;
- a tread band applied in a radially external position with respect to said belt structure;
- a pair of sidewalls applied laterally on opposite sides with respect to said carcass structure;
   wherein said structural element is at least one of said tread band, said pair of sidewalls, and said bead filler.

Preferably, said tyre can further comprise:
- a tread underlayer applied in a radially internal position with respect to said tread band; and, optionally
- a pair of sidewall inserts extending radially from each of said bead structures to the corresponding lateral edge of said tread band;
   wherein said structural element is at least one of said tread underlayer, or said pair of sidewall inserts.

In a second aspect, the present invention relates to a crosslinkable elastomeric composition comprising:
(a) 100 phr of at least one elastomeric polymer;
(b) from about 0.1 phr to about 120 phr, preferably from about 20 phr to about 90 phr, of at least one reinforcing filler;
(c) from about 0.01 phr to about 20 phr, preferably from about 0.1 phr to about 10 phr, of at least one oxetane derivative, said oxetane derivative preferably having the following general formula (I): 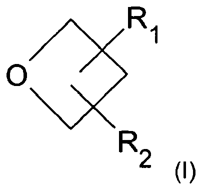 wherein
   R₁ is a linear or branched alkyl group having from 1 to 6 carbon atoms, or a linear or branched alkylaryl group having from 7 to 12 carbon atoms, and
   R₂ is a linear or branched alkyl group having from 1 to 6 carbon atoms, or a linear or branched alkylaryl group having from 7 to 12 carbon atoms, optionally comprising one or more substituent selected from the group of halide, hydroxy, alkoxy, haloalkoxy, amino, nitro, thio, cyano, acyl and acyloxy.
(d) from about 0.01 phr to about 10 phr, preferably from about 0.1 phr to about 5 phr, of at least one carboxylic acid, or a derivative thereof, said carboxylic acid preferably having the following general formula (II): 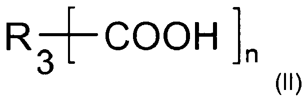
wherein wherein R₃ is an n-valent aliphatic or aromatic organic group having up to 18 carbon atoms, and n is 1 or 2, and wherein said derivative is selected from the group of halides and anhydrides of said carboxylic acid having general formula (II).

According to a further aspect, the present invention relates to a crosslinked manufactured article obtained by crosslinking a crosslinkable elastomeric composition above reported.

For the purposes of the present description and of the claims which follow the term "phr" means the parts by weight of a given component of the crosslinkable elastomeric composition per 100 parts by weight of the elastomeric polymer(s).

The present invention, in at least one of the abovementioned aspects, may show one or more of the preferred characteristics hereinafter described.

According to one preferred embodiment, said at least one oxetane derivative (c) has the following general formula (I): 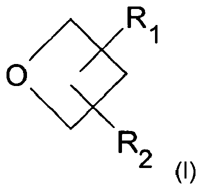 wherein
R₁ is a linear or branched alkyl group having from 1 to 6 carbon atoms, or a linear or branched alkylaryl group having from 7 to 12 carbon atoms, and
R₂ is a linear or branched alkyl group having from 1 to 6 carbon atoms, or a linear or branched alkylaryl group having from 7 to 12 carbon atoms, optionally comprising one or more substituent selected from the group of halide, hydroxy, alkoxy, haloalkoxy, amino, nitro, thio, cyano, acyl and acyloxy.

The substituent groups represented by R₁ and R₂ can be linked to any position of the oxetane ring, to give 2-2, 2-3, 2-4, or 3-3 bi-substituted oxetane derivatives. Preferably, the substituent groups represented by R₁ and R₂ are both linked to the 3-position. For sake of clarity, the above mentioned position numbers of the oxetane ring follow the IUPAC rule assigning 1 to the oxygen heteroatom and the following numbers to the carbon atoms.

Preferably, in the above formula (I), R₁ is a linear or branched alkyl group having from 1 to 3 carbon atoms or branched alkylaryl group having from 7 to 9 carbon atoms, and R₂ is a linear or branched alkyl group having from 1 to 3 carbon atoms, or a linear or branched alkylaryl group having from 7 to 9 carbon atoms, optionally comprising one or more substituent selected from the group of halide, hydroxy, alkoxy, haloalkoxy, amino, nitro, thio, cyano, acyl and acyloxy.

More preferably, in the above formula (I), R₁ is a linear or branched alkyl group having from 1 to 3 carbon atoms, and R₂ is a linear or branched alkyl group having from 1 to 3 carbon atoms, optionally comprising one or more substituent selected from the group of halide, hydroxy, alkoxy, haloalkoxy, and thio.

Advantageously, the oxetane derivatives (c) used in the present invention are selected from the compounds exemplified below, wherein each compound is represented by the general formula (a) with the exemplified R₁ and R₂ groups.

| Compound | 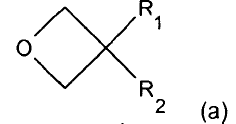 | |
|---|---|---|
| | R₁ | R₂ |
| 1 | -CH₃ | -CH₂OH |
| 2 | -CH₂CH₃ | -CH₂OH |
| 3 | -CH₂CH₂CH₃ | -CH₂OH |
| 4 | -CH₂CH₂CH₂CH₃ | -CH₂OH |
| 5 | -CH₃ | -CH₂CH₂OH |
| 6 | -CH₂CH₃ | -CH₂CH₂CH₂OH |
| 7 | -CH₂CH₂CH₃ | -CH₂CH₂OH |
| 8 | -CH₃ | -CH₂NH₂ |
| 9 | -CH₂CH₃ | -CH₂NH₂ |
| 10 | -CH₃ | -CH₂Br |
| 11 | -CH₂CH₃ | -CH₂Br |
| 12 | -CH₂CH₂CH₂CH₃ | -CH₂Br |
| 13 | -CH₃ | -CH₂Cl |
| 14 | -CH₂CH₃ | -CH₂Cl |
| 15 | -CH₂CH₂CH₃ | -CH₂Cl |
| 16 | -CH₃ | -CH₂O(CH₂)₄Br |
| 17 | -CH₂CH₃ | -CH₂O(CH₂)₄Br |
| 18 | -CH₃ | -CH₂SH |
| 19 | -CH₂CH₃ | -CH₂SH |
| 20 | -CH₃ | -CH₂CH₂SH |

The oxetane derivatives used in the present invention are prepared by technique known in the art, such as those described in US 5,247,103, or are commercially available from Perstorp Specialty Chemical AB, Sweden, Chemos GmbH, Germany, and Advanced Technology & Industrial Co., Ltd., Hong Kong.

The oxetane derivatives useful in the present invention are added to the crosslinkable elastomeric composition in an amount ranging from about 0.01 phr to about 20 phr, preferably from about 0.1 phr to about 10 phr, and more preferably from about 0.2 phr to about 5 phr.

According to one preferred embodiment, said at least one carboxylic acid (d) has the following general formula (II): 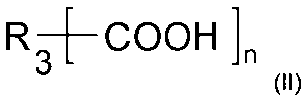 wherein
wherein R₃ is an n-valent aliphatic or aromatic organic group having up to 18 carbon atoms, and n is 1 or 2, and wherein said derivative is selected from the group of halides and anhydrides of said carboxylic acid having general formula (II).

More preferably, R₃ is an n-valent linear or branched alkyl group having up to 14 carbon atoms, an n-valent aryl group having up to 20 carbon atoms or an n-valent linear or branched alkylaryl group having up to 24 carbon atoms, optionally comprising one or more substituent selected from the group of hydroxy, alkoxy, thio, dithio, alkylthio, alkyldithio.

Particularly useful examples of unsubstituted and substituted carboxylic acids, wherein R₃ is an n-valent linear or branched alkyl group having up to 14 carbon atoms and n is equal to 1, are represented by acetic acid, propionic acid, butyric acid, valeric acid, caproic acid, crotonic acid, glycolic acid, thioglycolic acid, lactic acid, thiolactic acid, 3-hydroxypropionic acid, 3-mercaptopropionic acid, glyceric acid, 2-hydroxybutyric acid, 2-hydroxyisobutyric acid, 3-hydroxybutyric acid, 4-hydroxybutyric acid, 2-mercaptobutyric acid, 2-mercaptoisobutyric acid, 3-mercaptoisobutyric acid, 4-mercaptobutyric acid, mevalonic acid.

Particularly, useful examples of unsubstituted and substituted carboxylic acids wherein R₃ is an n-valent linear or branched alkyl group having up to 14 carbon atoms and n is equal to 2 are represented by malonic acid, succinic acid, citraconic acid, glutaric acid, adipic acid, tartaric acid, tartronic acid, mercaptotartronic acid, malic acid, maleic acid, 2,2'-dithiodiacetic acid, 3,3'-dithiopropionic acid, 2,2'-dithiopropionic acid, 4,4'-dithiodibutyric acid, (ethylenedithio)diacetic acid, mercaptosuccinic acid, dimercaptosuccinic acid. Particularly, useful examples of unsubstituted and substituted carboxylic acids wherein R₃ is an n-valent aryl group having up to 20 carbon atoms and n is equal to 1 are represented by benzoic acid, salicylic acid, 3-hydroxybenzoic acid, 3-mercaptobenzoic acid, thiosalicylic acid, naphtoic acid, 6-hydroxy-2-naphtoic acid, 6-mercapto-2-naphtoic acid.

Particularly, useful examples of unsubstituted and substituted carboxylic acids wherein R₃ is an n-valent aryl group having up to 20 carbon atoms and n is equal to 2 are represented by phthalic acid, isophthalic acid, terephthalic acid, 3-hydroxyphthalic acid, 4-hydroxyphthalic acid, 3-mercaptophthalic acid, 4-mercaptophthalic acid, 2,2'-dithiosalicylic acid, 2,2'-dithiobisbenzoic acid, 3,3'-dithiodibenzoic acid.

Particularly, useful examples of unsubstituted and substituted carboxylic acids wherein R₃ is an n-valent linear or branched alkylaryl group having up to 24 carbon atoms and n is equal to 1 are phenylacetic acid, mandelic acid, thiomandelic acid, cinnamic acid, hydrocinnamic acid, coumaric acid, thiocoumaric acid, caffeic acid, benzilic acid, thiobenzilic acid.

Particularly, useful examples of unsubstituted and substituted carboxylic acids wherein R₃ is an n-valent linear or branched alkylaryl group having up to 24 carbon atoms and n is equal to 2 are 1,2-phenylenediacetic acid, 1,4-benzenediacetic acid, p-phenylenedipropionic acid, 2,5-dihydroxy-1,4-benzenediacetic acid, 2,5-dimercapto-1,4-benzenediacetic acid, 4,4'-dithiobiscinnamic acid.

Advantageously, said derivative is selected from the group of chlorides, bromides and anhydrides of the above described carboxylic acids within general formula (II).

The carboxylic acids used in the present invention can be prepared with conventional techniques known to a man skilled in the art. The carboxylic acids employed in the present invention are commercially available from several suppliers, such as, for example, Acros Organics, Belgium; AppliChem GmbH, Germany; Fisher Scientific Company L.L.C., Pittsburgh, PA, USA; and Hallochem Pharma Co., Ltd., China.

The carboxylic acids useful in the present invention are added to the crosslinkable elastomeric composition in an amount ranging from about 0.01 phr to about 10 phr, preferably from about 0.1 phr to about 5 phr, and more preferably from about 0.2 phr to about 3 phr.

According to one preferred embodiment, said at least one elastomeric polymer (a) may be selected, for example, from (a₁) diene elastomeric polymers which are commonly used in sulfur-crosslinkable elastomeric compositions, that are particularly suitable for producing tyres, that is to say from elastomeric polymers or copolymers with an unsaturated chain having a glass transition temperature (Tg) generally below 20°C, typically in the range of from about 0°C to -110°C. These polymers or copolymers may be of natural origin or may be obtained by solution polymerization, emulsion polymerization or gas-phase polymerization of one or more conjugated diolefins, optionally blended with at least one comonomer selected from monovinylarenes and/or polar comonomers. Typically, the obtained polymers or copolymers contain said at least one comonomer selected from monovinylarenes and/or polar comonomers in an amount of not more than 80% by weight.

The conjugated diolefins generally contain from 4 to 12, preferably from 4 to 8 carbon atoms, and may be selected, for example, from: 1,3-butadiene, isoprene, 2,3-dimethyl-1,3-butadiene, 1,3-pentadiene, 1,3-hexadiene, 3-butyl-1,3-octadiene, 2 phenyl-1,3-butadiene, or mixtures thereof. 1,3-butadiene, or isoprene, are particularly preferred.

Monovinylarenes which may optionally be used as comonomers generally contain from 8 to 20, preferably from 8 to 12 carbon atoms, and may be selected, for example, from: stirene; 1-vinylnaphthalene; 2-vinylnaphthalene; various alkyl, cycloalkyl, aryl, alkylaryl or arylalkyl derivatives of stirene such as, for example, a-methylstirene, 3-methylstirene, 4-propylstirene, 4-cyclohexylstirene, 4-dodecylstirene, 2-ethyl-4-benzylstirene, 4-p-tolylstirene, 4-(4-phenylbutyl)stirene, or mixtures thereof. Stirene is particularly preferred. Polar comonomers which may optionally be used may be selected, for example, from: vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile, or mixtures thereof.

Preferably, said diene elastomeric polymer (a₁) may be selected, for example, from: cis-1,4-polyisoprene (natural or synthetic, preferably natural rubber), 3,4-polyisoprene, polybutadiene (in particular, polybutadiene with a high 1,4-cis content), optionally halogenated isoprene/isobutene copolymers, 1,3-butadiene/acrylonitrile copolymers, stirene/1,3-butadiene copolymers, stirene/isoprene/1,3-butadiene copolymers, stirene/1,3-butadiene/acrylonitrile copolymers, or mixtures thereof.

Natural rubber and polyisoprene rubber are preferably employed for internal structural elements, such as, for example, bead filler. Other synthetic rubbers like butadiene rubbers and styrene/butadiene rubbers, are preferably employed for external structural elements, such as, for example, tread band, sidewall, tread underlayer and sidewall inserts.

Alternatively, said at least one elastomeric polymer (a) may be selected, for example, from (a₂) elastomeric polymers of one or more monoolefins with an olefinic comonomer or derivatives thereof. The monoolefins may be selected, for example, from: ethylene and a-olefins generally containing from 3 to 12 carbon atoms, such as, for example, propylene, 1-butene, 1-pentene, 1-hexene, 1-octene, or mixtures thereof. The following are preferred: copolymers between ethylene and an a-olefin, optionally with a diene; isobutene homopolymers or copolymers thereof with small amounts of a diene, which are optionally at least partially halogenated. The diene optionally present generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinylnorbornene, or mixtures thereof. Among these, the following are particularly preferred: ethylene/propylene copolymers (EPR) or ethylene/propylene/diene copolymers (EPDM); poly-isobutene; butyl rubbers; halobutyl rubbers, in particular chlorobutyl or bromobutyl rubbers; or mixtures thereof.

Mixtures of the abovementioned diene elastomeric polymers (a₁) with the abovementioned elastomeric polymers (a₂), may also be used.

The above reported elastomeric polymers (a) may optionally be functionalized by reaction with suitable terminating agents or coupling agents. In particular, the diene elastomeric polymers (a₁) obtained by anionic polymerization in the presence of an organometallic initiator (in particular an organolithium initiator) may be functionalized by reacting the residual organometallic groups derived from the initiator with suitable terminating agents or coupling agents such as, for example, imines, carbodiimides, alkyltin halides, substituted benzophenones, alkoxysilanes or aryloxysilanes (see, for example, European Patent EP 451,604, or United States Patents US 4,742,124, or US 4,550,142).

The above reported elastomeric polymers (a) may optionally include at least one functional group which may be selected, for example, from: carboxylic groups, carboxylate groups, anhydride groups, ester groups, epoxy groups, or mixtures thereof.

According to the present invention, said at least one reinforcing filler (b) may be selected from those commonly used for crosslinked manufactured products, in particular for tyres, such as, for example, carbon black, silica, alumina, aluminosilicates, calcium carbonate, kaolin, or mixtures thereof. Carbon black, silica and mixture thereof are particularly preferred.

According to one preferred embodiment, said carbon black reinforcing filler may be selected from those having a surface area of not less than 20 m²/g (determined according to ASTM D6556-07 Standard Test Method for Carbon Black-Total and External Surface Area by Nitrogen Adsorption).

According to one preferred embodiment, said silica reinforcing filler may be selected, for example, from: pyrogenic silica, precipitated amorphous silica, wet silica (hydrated silicic acid), dry silica (anhydrous silicic acid), fumed silica, vegetal silica (i.e., silica obtained from agricultural waste, like rice hulls and rice straw), calcium silicate, or mixtures thereof. Other suitable fillers include aluminum silicate, magnesium silicate, or mixtures thereof. Among these, precipitated amorphous wet-process, hydrated silicas are preferred. These silicas are so-called because they are produced by a chemical reaction in water, from which they are precipitated as ultrafine, spherical particles. These primary particles strongly associate into aggregates, which in turn combine less strongly into agglomerates. The BET surface area, as measured according to ASTM D1993-03 Standard Test Method for Precipitated Silica-Surface Area by Multipoint BET Nitrogen Adsorption, gives the best measure of the reinforcing character of different silicas.

Silica reinforcing fillers which may be advantageously used according to the present invention, preferably have a surface area of from about 32 m²/g to about 400 m²/g, more preferably of from about 100 m²/g to about 250 m²/g, still more preferably of from about 150 m²/g to about 220 m²/g. The pH of said silica reinforcing fillers is, generally, of from about 5.5 to about 7.0, preferably of from about 5.5 to about 6.8.

Examples of silica reinforcing fillers which may be used according to the present invention and are available commercially are the products known by the name of Hi-Sil^{®} 190, Hi-Sil^{®} 210, Hi-Sil^{®} 215, Hi-Sil^{®} 233, Hi-Sil^{®} 243, from PPG Industries (Pittsburgh, Pa.); or the products known by the name of Ultrasil^{®} VN2, Ultrasil^{®} VN3 from Degussa; or the product known under the name of Zeosil^{®} 1165MP from Rhodia.

When a reinforcing filler comprising silica is present, the crosslinkable elastomeric composition may advantageously incorporate a silane coupling agent capable of interacting with the silica and of linking it to the elastomeric polymer(s) during the vulcanization.

Coupling agents that are preferably used are those based on silane which may be identified, for example, by the following structural formula (I):

(R₂)₃Si-CₜH₂ₜ-X (I)

wherein the groups R₂, which may be equal or different from each other, are selected from: alkyl, alkoxy or aryloxy groups or from halogen atoms, on condition that at least one of the groups R₂ is an alkoxy or aryloxy group; t is an integer between 1 and 6 inclusive; X is a group selected from: nitroso, mercapto, amino, epoxide, vinyl, imide, chloro, -(S)ᵤCₜH₂ₜSi-(R₂)₃ or or -S-COR₂ in which u and t are integers of from 1 to 6 extremes included and the groups R₂ are defined as reported above.

Among the coupling agents that are particularly preferred are bis(3-triethoxysilylpropyl) tetrasulfide and bis(3-triethoxysilylpropyl) disulfide. Said coupling agents may be used as such or as a suitable mixture with an inert filler (for example carbon black) so as to facilitate their incorporation into the crosslinkable elastomeric composition.

The crosslinkable elastomeric composition above reported may be vulcanized according to known techniques, in particular with sulfur-based vulcanizing systems commonly used for elastomeric polymers. To this end, in the composition, after one or more steps of thermomechanical processing, a sulfur-based vulcanizing agent is incorporated, preferably together with vulcanization activators and accelerators. In the final processing step, the temperature is generally kept below 120°C and preferably below 100°C, so as to avoid any unwanted pre-crosslinking phenomena.

The vulcanizing agent most advantageously used is sulfur, or molecules containing sulfur (sulfur donors), with accelerators, activators and/or retardants known to those skilled in the art.

Said sulfur or derivatives thereof may be selected, for example, from (i) soluble sulfur (crystalline sulfur); (ii) insoluble sulfur (polymeric sulfur); (iii) sulfur dispersed in oil (for example 33% sulfur known under the trade name Crystex^{®} OT33 from Flexsys); (iv) sulfur donors such as, for example, tetramethylthiuram disulphide (TMTD), tetrabenzylthiuram disulphide (TBzTD), tetraethylthiuram disulphide (TETD), tetrabutylthiuram disulphide (TBTD), dimethyldiphenylthiuram disulphide (MPTD), pentamethylenethiuram tetrasulphide or hexasulphide (DPTT), morpholinobenzothiazole disulphide (MBSS), N-oxydiethylenedithiocarbamyl-N'-oxydiethylenesulphenamide (OTOS), dithiodimorpholine (DTM or DTDM), caprolactam disulphide (CLD); or mixtures thereof.

Said sulfur or derivatives thereof are preferably employed in the crosslinkable elastomeric composition of the present invention in an amount of from about 0.05 phr to about 10 phr, more preferably from about 0.1 phr to about 5 phr, and even more preferably from about 0.2 phr to about 2 phr.

According to a further preferred embodiment, the crosslinkable elastomeric composition of the present invention, further comprises at least one vulcanization activator.

Vulcanization activators that are particularly effective are zinc compounds, and in particular ZnO, ZnCO₃, zinc salts of saturated or unsaturated fatty acids containing from 8 to 18 carbon atoms, such as, for example, zinc stearate, which are preferably formed in situ in the elastomeric composition from ZnO and fatty acid, and also BiO, PbO, Pb₃O₄, PbO₂, or mixtures thereof.

Said vulcanization activators are preferably employed in the crosslinkable elastomeric composition of the present invention in an amount of from about 0.5 phr to about 10 phr, more preferably of from 1 phr to 5 phr, and even more preferably of from 1.5 phr to 3.5 phr.

According to a further preferred embodiment, the crosslinkable elastomeric composition of the present invention, further comprises at least one vulcanization accelerator.

Vulcanization accelerators that are commonly used may be selected, for example, from: dithiocarbamates, guanidine, thiourea, thiazoles, sulfenamides, thiurams, amines, xanthates, or mixtures thereof.

Said vulcanization accelerators are preferably employed in the crosslinkable elastomeric composition of the present invention in an amount of from about 0.05 phr to about 10 phr, more preferably from about 0.1 phr to about 5 phr, and even more preferably from about 0.5 phr to about 3 phr.

According to a further preferred embodiment, the crosslinkable elastomeric composition of the present invention, further comprises at least one vulcanization retardant.

Vulcanization retardants that are commonly used may be selected, for example, from: urea, N-cyclohexyl-2-benzothiazolyl sulfenamide, N-cycloesil-phtalimide, N-cyclohexylthiophthalimides, N-Nitrosodiphenylamine, or mixtures thereof.

Said vulcanization retardants are preferably employed in the crosslinkable elastomeric composition of the present invention in an amount of from about 0.001 phr to about 1 phr, more preferably from about 0.005 phr to about 0.5 phr, and even more preferably from about 0.01 phr to about 0.3 phr.

Said crosslinkable elastomeric composition may comprise other commonly used additives selected on the basis of the specific application for which the composition is intended. For example, the following may be added to said crosslinkable elastomeric composition: antioxidants, anti-ageing agents, plasticizers, adhesives, antiozonants (in particular of the p-phenylenediamine type), waxes, modifying resins, fibres (for example Kevlar^{®} pulp), or mixtures thereof.

For the purpose of further improving the processability, a plasticizer generally selected from mineral oils, vegetable oils, synthetic oils, polyalkylenglycols, or mixtures thereof, such as, for example, aromatic oil, naphthenic oil, phthalate oils, soybean oil, polyethylene glycol (PEG plasticizers) or mixtures thereof, may be added to said crosslinkable elastomeric composition. The amount of plasticizer generally ranges of from 0 phr to 70 phr, preferably of from of 1 phr to 30 phr.

The above reported crosslinkable elastomeric composition may be prepared by mixing together the elastomeric polymer (a), the reinforcing filler (b), the oxetane derivative (c), and the carboxylic acid (d) above reported, with the other additives optionally present, according to techniques known in the art.

Alternatively, the oxetane derivative (c), and the carboxylic acid (d) may be pre-mixed with the elastomeric polymer(s) so as to form a masterbatch which will be subsequently mixed with the remaining components of the crosslinkable elastomeric composition.

The mixing steps may be carried out, for example, using an open mixer of open-mill type, or an internal mixer of the type with tangential rotors (Banbury) or with interlocking rotors (Intermix), or in continuous mixers of Ko-Kneader type (Buss), or of co-rotating or counter-rotating twin-screw type.

The process for producing the tyre according to the present invention may be carried out according to techniques and using apparatus that are known in the art, said process including manufacturing a green tyre, and subsequently moulding and vulcanizing the green tyre.

### Brief description of the drawings

The present invention will now be illustrated in further detail by means of illustrative embodiments, with reference to the attached figures wherein:
- Fig. 1 is a view in cross-section of a portion of a tyre made according to one embodiment of the present invention;
- Fig. 2 is a view in cross-section of a portion of a tyre made according to a further embodiment of the present invention.

### Detailed description of the preferred embodiments

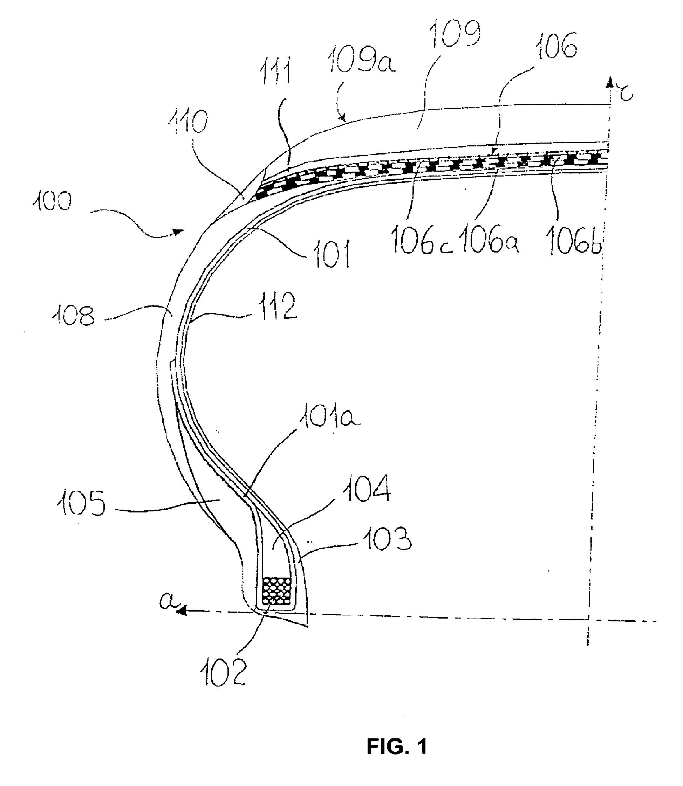

With reference to Fig. 1, "a" indicates an axial direction and "r" indicates a radial direction. For simplicity, Fig. 1 shows only a portion of the tyre, the remaining portion not represented being identical and symmetrically arranged with respect to the radial direction "r".

The tyre (100) comprises at least one carcass ply (101), the opposite lateral edges of which are associated with respective bead structures comprising at least one bead core (102) and at least one bead filler (104). The association between the carcass ply (101) and the bead core (102) is achieved here by turning back the opposite lateral edges of the carcass ply (101) around the bead core (102) so as to form the so-called carcass turn-up (101 a) as shown in Fig. 1.

Alternatively, the conventional bead core (102) may be replaced with at least one annular insert formed from rubberized wires arranged in concentric coils (not represented in Fig. 1) (see, for example, European Patent Applications EP 928,680 or EP 928,702). In this case, the carcass ply (101) is not turned-up around said annular inserts, the coupling being provided by a second carcass ply (not represented in Fig. 1) applied externally over the first.

The carcass ply (101) usually comprises a plurality of reinforcing cords arranged parallel to each other and at least partially coated with a layer of a crosslinked elastomeric composition. These reinforcing cords are usually made of textile fibres, for example rayon, nylon or polyethylene terephthalate, or of steel wires stranded together, coated with a metal alloy (for example copper/zinc, zinc/manganese, zinc/molybdenum/cobalt alloys, and the like).

The carcass ply (101) is usually of radial type, i.e. it incorporates reinforcing cords arranged in a substantially perpendicular direction relative to a circumferential direction.

The core (102) is enclosed in a bead (103), defined along an inner circumferential edge of the tyre (100), with which the tyre engages on a rim (not represented in Fig. 1) forming part of a vehicle wheel. The space defined by each carcass turn-up (101a) contains a bead filler (104), which may comprise an elastomeric composition according to an aspect of the present invention.

An anti-abrasive layer (105) is usually placed in an axially external position relative to the carcass turn-up (101a).

A belt structure (106) is applied along the circumference of the carcass ply (101). In the particular embodiment of Fig. 1, the belt structure (106) comprises two belt strips (106a, 106b) which incorporate a plurality of reinforcing cords, typically metal cords, which are parallel to each other in each strip and intersecting with respect to the adjacent strip, oriented so as to form a predetermined angle relative to a circumferential direction. On the radially outermost belt strip (106b), at least one zero-degree reinforcing layer (106c) may optionally be applied, commonly known as a "0° belt", which generally incorporates a plurality of reinforcing cords, typically textile cords, arranged at an angle of a few degrees relative to a circumferential direction, usually coated with a crosslinked elastomeric composition.

A tread band (109), which may comprise an elastomeric composition according to an aspect of the present invention, is applied circumferentially in a position radially external to the belt structure (106). The lateral edges of the tread band (109) are connected to the side walls (108). Externally, the tread band (109) has a rolling surface (109a) designed to come into contact with the ground. Circumferential grooves which are connected by transverse notches (not represented in Fig. 1) so as to define a plurality of blocks of various shapes and sizes distributed over the rolling surface (109a) are generally made in this surface (109a), which is represented for simplicity in Fig. 1 as being smooth.

A sidewall (108), which may comprise an elastomeric composition according to an aspect of the present invention, is also applied externally onto the carcass ply (101), this sidewall extending, in an axially external position, from the bead (103) to the end of the belt structure (106).

A tread underlayer (111), which may comprise an elastomeric composition according to an aspect of the present invention, may be placed between the belt structure (106) and the tread band (109). As represented in Fig. 1, the tread underlayer (111) may have uniform thickness. Alternatively, the tread underlayer (111) may have a variable thickness in the transversal direction. For example, the thickness may be greater near its outer edges than at a central zone. In Fig. 1, said tread underlayer (111) extends over a surface substantially corresponding to the surface of development of said belt structure (106). Alternatively, said tread underlayer (111) extends only along at least one portion of the development of said belt structure (106), for instance at opposite side portions of said belt structure (106) (not represented in Fig. 1).

A strip made of elastomeric material (110), commonly known as a "mini-sidewall", may optionally be present in the connecting zone between the sidewalls (108) and the tread band (109), this mini-sidewall generally being obtained by co-extrusion with the tread band and allowing an improvement in the mechanical interaction between the tread band (109) and the side walls (108). Alternatively, the end portion of the side wall (108) directly covers the lateral edge of the tread band (109).

In the case of tubeless tyres, a rubber layer (112) generally known as a liner, which provides the necessary impermeability to the inflation air of the tyre, may also be provided in an inner position relative to the carcass ply (101).

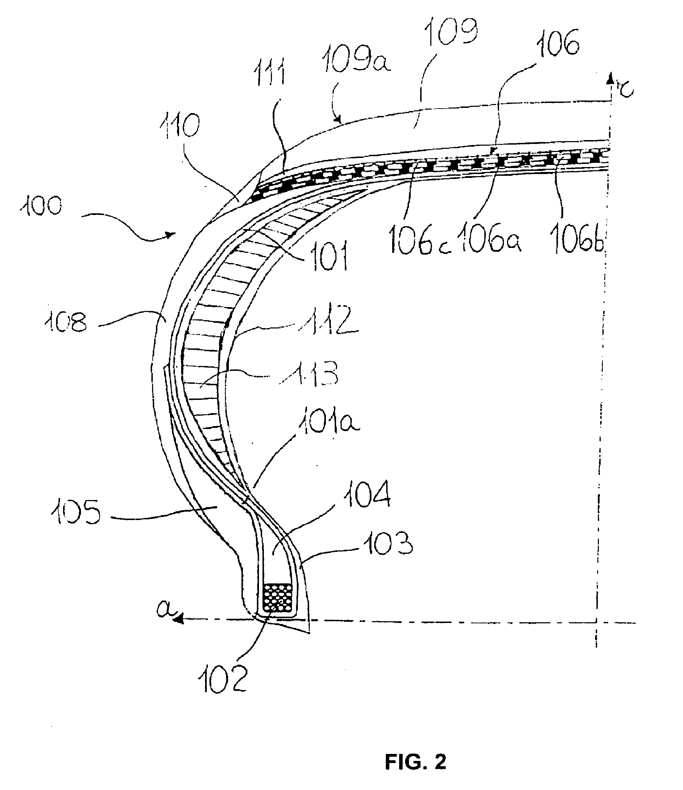

Fig. 2 shows a tyre (100) having a structure as described in Fig. 1 (the same reference numbers have the same meanings as disclosed in Fig. 1) further comprising a sidewall insert (113), which may comprise an elastomeric composition according to an aspect of the present invention. The sidewall insert (113) extends radially between the bead structure (103) and the lateral edge of the tread band (109). The sidewall insert (113) is placed in an axially internal or external position with respect to the carcass ply: for example, as represented in Fig. 2, the sidewall insert (113) is placed between the carcass ply (101) and the liner (112).

Alternatively, in the case more than one carcass ply is present, a sidewall insert (113) may be placed between two of said carcass plies (not represented in Fig. 2).

Alternatively, a sidewall insert (113) may be placed between the carcass ply and the sidewall (not represented in Fig. 2). More than one sidewall insert may be present as disclosed, for example, in United States Patent US 5,238,040, or in European Patent Application EP 943,466.

Said sidewall insert (113) is usually used in the case of extended mobility tyres such as, for example, run flat tyres.

Although the present invention has been illustrated specifically in relation to a tyre, other crosslinked elastomeric manufactured products that may be produced according to the invention may be, for example, conveyor belts, drive belts, or hoses.

The present invention will be further illustrated below by means of a number of preparation examples, which are given for purely indicative purposes and without any limitation of this invention.

The samples of the following examples were evaluated according to the following tests and measurements.

The Mooney viscosity ML(1+4) at 100°C was measured according to Standard ISO 289-1:2005, on the non-crosslinked elastomeric compositions obtained as described below.

The tensile modulus (100% Modulus and 300% Modulus), the tensile strength, as well as the stress at break, the elongation at break and the energy at break, were measured according to Standard ISO 37:2005, on samples of the elastomeric compositions described below crosslinked at 170°C, for 10 min. The hardness in IRHD degrees (at 23°C or at 100°C) according to Standard ISO 48:2007 and the Shore hardness according to ISO 7619-1:2004 were measured on samples of the elastomeric compositions vulcanized at 170°C, for 10 min.

The MDR rheometric analysis was carried out using a Monsanto MDR rheometer, the tests being carried out at 170°C, for 30 min, at an oscillation frequency of 1.66 Hz (100 oscillations per minute) and an oscillation amplitude of ± 0.5°.

The dynamic mechanical properties, were measured using an Instron dynamic device in the traction-compression mode according to the following methods. A test piece of the crosslinked elastomeric composition (crosslinked at 170°C, for 10 min) having a cylindrical form (length = 25 mm; diameter = 12 mm), compression-preloaded up to a 25% longitudinal deformation with respect to the initial length, and kept at the prefixed temperature (10°C, 23°C, and 70°C) for the whole duration of the test, was submitted to a dynamic sinusoidal strain having an amplitude of ±3.5% with respect to the length under pre-load, with a 100 Hz frequency. The dynamic mechanical properties are expressed in terms of dynamic elastic modulus (E') and loss factor values (Tan δ). The Tan δ value is calculated as a ratio between viscous modulus (E") and elastic modulus (E').

### EXAMPLE 1

### Preparation of elastomeric compositions 1 to 4

The elastomeric compositions 1 to 4 given in Table 1 were prepared as follows (the amounts of the various components are given in phr).

All the components, except sulfur, accelerator (CBS), and retardant (PVI) were mixed together in an internal mixer (model Pomini PL 1.6) for about 5 min (1st Step). As soon as the temperature reached 145±5°C, the elastomeric composition was discharged. The sulfur, accelerator (CBS), and retardant (PVI) were then added and mixing was carried out in an internal mixer (model Thermo Haake Rheomix 3000p) for about 5 minutes at a maximum temperature of 100°C (2nd Step).

**TABLE 1**

| SAMPLE | 1 (*) | 2 (*) | 3 (*) | 4 (^) |
|---|---|---|---|---|
| **1^{st} STEP** | | | | |
| BR | 32.00 | 32.00 | 32.00 | 32.00 |
| SBR | 68.00 | 68.00 | 68.00 | 68.00 |
| N234 | 10.00 | 10.00 | 10.00 | 10.00 |
| SiO₂ | 70.00 | 70.00 | 70.00 | 70.00 |
| SI69 | 5.60 | 5.60 | 5.60 | 5.60 |
| Wax | 1.50 | 1.50 | 1.50 | 1.50 |
| CR | 6.00 | 6.00 | 6.00 | 6.00 |
| Zinc Oxide | 2.20 | 2.20 | 2.20 | 2.20 |
| Plasticizer | 13.00 | 13.00 | 13.00 | 13.00 |
| TMQ | 1.00 | 1.00 | 1.00 | 1.00 |
| 6-PPD | 1.50 | 1.50 | 1.50 | 1.50 |
| ZS | 2.50 | 2.50 | 2.50 | 2.50 |
| TSA | - | 1.00 | - | 1.00 |
| TMPO | - | - | 1.00 | 1.00 |

| **2^{nd} STEP** | | | | |
|---|---|---|---|---|
| CBS | 2.20 | 2.20 | 2.20 | 2.20 |
| PVI | 0.30 | 0.30 | 0.30 | 0.30 |
| Sulfur | 0.80 | 0.80 | 0.80 | 0.80 |

| | | | | |
|---|---|---|---|---|
| (*): comparison. (^): invention | | | | |

- BR:: Europrene Neocis™ BR40 cis-1,4-polybutadiene (Enichem Elastomeri, Italy);
- SBR:: solution-prepared (37.5 parts of TDAE oil) styrene/1,3-butadiene copolymer having a styrene content of 25.0% by weight (SLR 4630 - Dow Plastics);
- N234:: Carbon black (Cabot Corp.);
- SiO₂:: Precipitated silica (Zeosil^{®} 1165 MP - Rhodia);
- SI69:: Bis(3-triethoxysilylpropyl)-tetrasulfide, (Degussa);
- WAX:: Microcrystalline wax (Antilux^{®} 654, Lanxess);
- CR:: Coumarone resin (Novares C10, Ruetgers Chemicals, Germany)
- Plasticizer:: Treated distillated aromatic extract (Vivatec 500 - H&R Group)
- TMQ:: polymerized 2,2,4-trimethyl-1,2-dihydroquinoline (Vulcanox® HS/LG - Lanxess);
- ZS:: Polyplastol™ 6 -zinc salts of a mixture of fatty acids (Great Lakes Chemical Company)
- 6-PPD:: phenyl-p-phenylendiamine (Akzo Nobel);
- TSA:: Thiosalycilic acid (Aldrich)
- TMPO:: Trimethylol propane oxetane (Perstorp S.p.A.)
- CBS:: N-cyclohexyl-2-benzothiazyl-sulfenamide (Vulkacit^{®}CZ, Bayer);
- PVI:: N-(cyclohexylthio)-phthalimide (Santogard^{®} PVI - Flexsys)

All the samples were evaluated as described above and the results were summarized in the following Table 2.

**TABLE 2**

| EXAMPLE | | 1 (*) | 2 (*) | 3 (*) | 4 (^) |
|---|---|---|---|---|---|
| GREEN PROPERTIES | | | | | |
| Money ML (1+4) 100°C | | 72.3 | 80.3 | 70.6 | 78.1 |

| STATIC MECHANICAL PROPERTIES | | | | | |
|---|---|---|---|---|---|
| 50% Modulus (MPa) | | 1.55 | 1.69 | 1.64 | 1.81 |
| 100% Modulus (MPa) | | 2.72 | 3.00 | 2.84 | 3.26 |
| 300% Modulus (MPa) | | 11.57 | 13.10 | 11.59 | 14.34 |
| Tensile strength (MPa) | | 15.22 | 16.41 | 15.01 | 16.56 |
| Elongation at break (%) | | 404.36 | 387.03 | 400.12 | 364.00 |
| Hardness IRHD (23°C) | | 77.8 | 77.1 | 78.1 | 78.6 |

| DYNAMIC MECHANICAL PROPERTIES | | | | | |
|---|---|---|---|---|---|
| 10°C E' | (MPa) | 13.92 | 14.0 | 14.6 | 14.35 |
| | Tan δ | 0.373 | 0.368 | 0.386 | 0.400 |
| 23°C | E' (MPa) | 11.52 | 11.2 | 11.97 | 12.4 |
| | Tan δ | 0.272 | 0.285 | 0.289 | 0.297 |
| 70°C | E' (MPa) | 7.92 | 7.44 | 7.95 | 8.09 |
| | Tan δ | 0.152 | 0.142 | 0.148 | 0.138 |

| | | | | | |
|---|---|---|---|---|---|
| (*): comparison. (^): invention | | | | | |

The data reported in Table 2 clearly show that, in comparison with the reference sample 1, the sample 2 has an increased viscosity, which is indicative of a more difficult workability in the manufacturing steps of the green product, and has a low value of Tan δ at 10°C, which is indicative of bad wet adherence. The sample 3 has substantially the same values of the reference sample 1, but an elastic modulus E' value at 10°C well higher than that of sample 1, which is indicative of an excessive stiffness, and a high value of Tan δ at 70°C, which is indicative of a high rolling resistance. On the contrary and surprisingly, the sample 4 has a high Tan δ value at 10°C and a low Tan δ value at 70°C, which is indicative of a good adherence on both wet and dry surfaces, together with a still good value of viscosity, increased values of moduli at 50%, 100%, and 300% elongation (this latter also being indicative of a high tear resistance).

### EXAMPLE 2

### Preparation of elastomeric compositions 5 to 10

The elastomeric compositions 5 to 10 given in Table 3 were prepared as follows (the amounts of the various components are given in phr).

All the components, except sulfur, accelerator (CBS), and retardant (PVI) were mixed together in an internal mixer (model Pomini PL 1.6) for about 5 min (1st Step). As soon as the temperature reached 145±5°C, the elastomeric composition was discharged. The sulfur, accelerator (CBS), and retardant (PVI) were then added and mixing was carried out in an internal mixer (model Thermo Haake Rheomix 3000p) for about 5 minutes at a maximum temperature of 100°C (2nd Step).

**TABLE 3**

| SAMPLE | 5 (*) | 6 (*) | 7 (*) | 8 (^) | 9 (*) | 10 (^) |
|---|---|---|---|---|---|---|
| **1^{St} STEP** | | | | | | |
| BR | 32.00 | 32.00 | 32.00 | 32.00 | 32.00 | 32.00 |
| SBR | 68.00 | 68.00 | 68.00 | 68.00 | 68.00 | 68.00 |
| N234 | 10.00 | 10.00 | 10.00 | 10.00 | 10.00 | 10.00 |
| SiO₂ | 70.00 | 70.00 | 70.00 | 70.00 | 70.00 | 70.00 |
| SI69 | 5.60 | 5.60 | 5.60 | 5.60 | 5.60 | 5.60 |
| Wax | 1.50 | 1.50 | 1.50 | 1.50 | 1.50 | 1.50 |
| CR | 6.00 | 6.00 | 6.00 | 6.00 | 6.00 | 6.00 |
| Zinc Oxide | 2.20 | 2.20 | 2.20 | 2.20 | 2.20 | 2.20 |
| Plasticizer | 13.00 | 13.00 | 13.00 | 13.00 | 13.00 | 13.00 |
| TMQ | 1.00 | 1.00 | 1.00 | 1.00 | 1.00 | 1.00 |
| 6-PPD | 1.50 | 1.50 | 1.50 | 1.50 | 1.50 | 1.50 |
| ZS | 2.50 | 2.50 | 2.50 | 2.50 | 2.50 | 2.50 |
| TMPO | - | 2.00 | - | 2.00 | - | 2.00 |
| DTSA | - | - | 1.00 | 1.00 | - | - |
| SA | - | - | - | | 1.00 | 1.00 |

| **2^{nd} STEP** | | | | | | |
|---|---|---|---|---|---|---|
| CBS | 2.20 | 2.20 | 2.20 | 2.20 | 2.20 | 2.20 |
| PVI | 0.30 | 0.30 | 0.30 | 0.30 | 0.30 | 0.30 |
| Sulfur | 0.80 | 0.80 | 0.80 | 0.80 | 0.80 | 0.80 |

| | | | | | | |
|---|---|---|---|---|---|---|
| (*): comparison. (^): invention | | | | | | |

The compounds listed in Table 3 are the same of Table 1. DTSA means dithiosalicylic acid and SA means salicylic acid, both manufactured by Aldrich. All the samples were evaluated as described above and the results were summarized in the following Table 4.

**TABLE 4**

| EXAMPLE | | 5 (*) | 6 (*) | 7 (*) | 8 (^) | 9 (*) | 10 (^) |
|---|---|---|---|---|---|---|---|
| GREEN PROPERTIES | | | | | | | |
| Money ML (1+4) 100°C | | 72.3 | 65 | 78.4 | 66.7 | 69.2 | 63 |

| STATIC MECHANICAL PROPERTIES | | | | | | | |
|---|---|---|---|---|---|---|---|
| 50% Modulus (MPa) | | 1.55 | 1.65 | 1.7 | 1.7 | 1.41 | 1.53 |
| 100% Modulus (MPa) | | 2.72 | 2.89 | 2.99 | 3.06 | 2.52 | 2.71 |
| 300% Modulus (MPa) | | 11.57 | 11.74 | 12.24 | 12.64 | 11.1 | 11.51 |
| Tensile strength (MPa) | | 15.22 | 14.33 | 13.71 | 14.7 | 14.61 | 15.32 |
| Elongation at break (%) | | 404.36 | 383.59 | 355.79 | 366.33 | 402.9 | 403.34 |
| Hardness IRHD (23°C) | | 77.8 | 78.8 | 78.9 | 76.7 | 72.5 | 75.5 |

| DYNAMIC MECHANICAL PROPERTIES | | | | | | | |
|---|---|---|---|---|---|---|---|
| 10°C | E' (MPa) | 13.92 | 13.0 | 14.15 | 14.84 | 14.38 | 14.88 |
| | Tan δ | 0.373 | 0.391 | 0.388 | 0.398 | 0.39 | 0.419 |
| 23°C | E' (MPa) | 11.52 | 10.6 | 11.7 | 12.04 | 11.69 | 11.99 |
| | Tan δ | 0.272 | 0.298 | 0.288 | 0.3 | 0.29 | 0.321 |
| 70°C | E' (MPa) | 7.92 | 6.8 | 8.01 | 7.54 | 7.92 | 7.3 |
| | Tan δ | 0.152 | 0.139 | 0.152 | 0.149 | 0.157 | 0.153 |

| | | | | | | | |
|---|---|---|---|---|---|---|---|
| (*): comparison (^): invention | | | | | | | |

The data of Table 4 confirm the good results of the samples 7 and 9 of the present invention comprising a combination of TMPO and dithiosalicylic acid or salicylic acid, respectively. In particular, with respect to reference sample 1, samples 7 and 9 show good viscosity values, which allow a good workability, increased or substantially equal values of moduli at 50%, 100% and 300% elongation, and an optimal combination of Tan δ values at 10°C and at 70°C, which allows to obtain a good adherence both on dry and wet road conditions.

## Claims

1. A tyre comprising at least one structural element including a crosslinked elastomeric material obtained by crosslinking a crosslinkable elastomeric composition comprising:
(a) 100 phr of at least one elastomeric polymer;
(b) from 0.1 phr to 120 phr of at least one reinforcing filler;
(c) from 0.01 phr to about 20 phr of at least one oxetane derivative; and
(d) from 0.01 phr to about 10 phr of at least one carboxylic acid, or a halide or an anhydride thereof.

2. Tyre according to claim 1, said tyre comprising:
- a carcass structure of a substantially toroidal shape, having opposite lateral edges associated with respective right-hand and left-hand bead structures defined by respective carcass turn-up, said bead structures comprising at least one bead core and at least one bead filler;
- a belt structure applied in a radially external position with respect to said carcass structure;
- a tread band applied in a radially external position with respect to said belt structure;
- a pair of sidewalls applied laterally on opposite sides with respect to said carcass structure;
wherein said structural element is at least one of said tread band, said pair of sidewalls, and said bead filler.

3. Tyre according to claim 2, wherein said tyre further comprises a tread underlayer applied in a radially internal position with respect to said tread band, wherein said structural element is said tread underlayer.

4. Tyre according to claim 2 or 3, wherein said tyre further comprises a pair of sidewall inserts extending radially between each of said bead structures and the corresponding lateral edge of said tread band, wherein said structural element is at least one of said pair of sidewall inserts.

5. Tyre according to any one of the preceding claims, wherein said oxetane derivative has the following general formula (I): 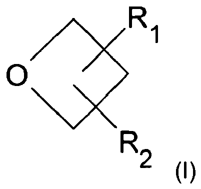 wherein
R₁ is a linear or branched alkyl group having from 1 to 6 carbon atoms, or a linear or branched alkylaryl group having from 7 to 12 carbon atoms, and
R₂ is a linear or branched alkyl group having from 1 to 6 carbon atoms, or a linear or branched alkylaryl group having from 7 to 12 carbon atoms, optionally comprising one or more substituent selected from the group of halide, hydroxy, alkoxy, haloalkoxy, amino, nitro, thio, cyano, acyl and acyloxy.

6. Tyre according to claim 5, wherein R₁ and R₂ are both linked to the 3-position of the oxetane ring.

7. Tyre according to claim 5, wherein R₁ is a linear or branched alkyl group having from 1 to 3 carbon atoms or branched alkylaryl group having from 7 to 9 carbon atoms, and R₂ is a linear or branched alkyl group having from 1 to 3 carbon atoms, or a linear or branched alkylaryl group having from 7 to 9 carbon atoms, optionally comprising one or more substituent selected from the group of halide, hydroxy, alkoxy, haloalkoxy, amino, nitro, thio, cyano, acyl and acyloxy.

8. Tyre according to claim 5, wherein said oxetane derivative is selected from the group consisting of the compounds listed in the following table:
| Compound | 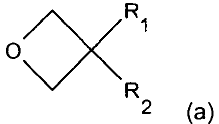 | |
|---|---|---|
| | R₁ | R₂ |
| 1 | -CH₃ | -CH₂OH |
| 2 | -CH₂CH₃ | -CH₂OH |
| 3 | -CH₂CH₂CH₃ | -CH₂OH |
| 4 | - CH₂CH₂ CH₂CH₃ | -CH₂OH |
| 5 | -CH₃ | -CH₂CH₂OH |
| 6 | -CH₂CH₃ | -CH₂CH₂CH₂OH |
| 7 | -CH₂CH₂CH₃ | -CH₂CH₂OH |
| 8 | -CH₃ | -CH₂NH₂ |
| 9 | -CH₂CH₃ | -CH₂NH₂ |
| 10 | -CH₃ | -CH₂Br |
| 11 | -CH₂CH₃ | -CH₂Br |
| 12 | -CH₂CH₂CH₂CH₃ | -CH₂Br |
| 13 | -CH₃ | -CH₂Cl |
| 14 | -CH₂CH₃ | -CH₂Cl |
| 15 | -CH₂CH₂CH₃ | -CH₂Cl |
| 16 | -CH₃ | -CH₂O(CH₂)₄Br |
| 17 | -CH₂CH₃ | -CH₂O(CH₂)₄Br |
| 18 | -CH₃ | -CH₂SH |
| 19 | -CH₂CH₃ | -CH₂SH |
| 20 | -CH₃ | -CH₂CH₂SH |

9. Tyre according to any one of the preceding claims, wherein said oxetane derivative is added to the crosslinkable elastomeric composition in an amount ranging from 0.1 phr to about 10 phr.

10. Tyre according to any one of the preceding claims, wherein said oxetane derivative is added to the crosslinkable elastomeric composition in an amount ranging from 0.2 phr to about 5 phr.

11. Tyre according to any one of the preceding claims, wherein said carboxylic acid has the following general formula (II): 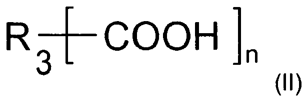 wherein
R₃ is an n-valent aliphatic or aromatic organic group having up to 24 carbon atoms, and n is 1 or 2, and wherein said derivative is selected from the group of halides and anhydrides of said carboxylic acid having general formula (II).

12. Tyre according to claim 11, wherein said R₃ is an n-valent linear or branched alkyl group having up to 14 carbon atoms, an n-valent aryl group having up to 20 carbon atoms or an n-valent linear or branched alkylaryl group having up to 24 carbon atoms.

13. Tyre according to any one of claims 11 or 12, wherein said R₃ comprises one or more substituent selected from the group of hydroxy, alkoxy, thio, dithio, alkylthio, alkyldithio.

14. Tyre according to any one of claims 11 to 13, wherein said carboxylic acid is selected from the group consisting of acetic acid, propionic acid, butyric acid, valeric acid, caproic acid, crotonic acid, glycolic acid, thioglycolic acid, lactic acid, thiolactic acid, 3-hydroxypropionic acid, 3-mercaptopropionic acid, glyceric acid, 2-hydroxybutyric acid, 2-hydroxyisobutyric acid, 3-hydroxybutyric acid, 4-hydroxybutyric acid, 2-mercaptobutyric acid, 2-mercaptoisobutyric acid, 3-mercaptoisobutyric acid, 4-mercaptobutyric acid, mevalonic acid, malonic acid, succinic acid, citraconic acid, glutaric acid, adipic acid, tartaric acid, tartronic acid, mercaptotartronic acid, malic acid, maleic acid, 2,2'-dithiodiacetic acid, 3,3'-dithiopropionic acid, 2,2'-dithiopropionic acid, 4,4'-dithiodibutyric acid, (ethylenedithio)diacetic acid, mercaptosuccinic acid, dimercaptosuccinic acid, benzoic acid, salicylic acid, 3-hydroxybenzoic acid, 3-mercaptobenzoic acid, thiosalicylic acid, naphtoic acid, 6-hydroxy-2-naphtoic acid, 6-mercapto-2-naphtoic acid, phthalic acid, isophthalic acid, terephthalic acid, 3-hydroxyphthalic acid, 4-hydroxyphthalic acid, 3-mercaptophthalic acid, 4-mercaptophthalic acid, 2,2'-dithiosalicylic acid, 2,2'-dithiobisbenzoic acid, 3,3'-dithiodibenzoic acid, phenylacetic acid, mandelic acid, thiomandelic acid, cinnamic acid, hydrocinnamic acid, coumaric acid, thiocoumaric acid, caffeic acid, benzilic acid, thiobenzilic acid, 1,2-phenylenediacetic acid, 1,4-benzenediacetic acid, p-phenylenedipropionic acid, 2,5-dihydroxy-1,4-benzenediacetic acid, 2,5-dimercapto-1,4-benzenediacetic acid, and 4,4'-dithiobiscinnamic acid.

15. Tyre according to any one of the preceding claims, wherein said carboxylic acid is added to the crosslinkable elastomeric composition in an amount ranging from 0.1 phr to about 5 phr.

16. Tyre according to any one of the preceding claims, wherein said carboxylic acid is added to the crosslinkable elastomeric composition in an amount ranging from 0.2 phr to about 3 phr.

## Patentansprüche

1. Reifen, der mindestens ein Strukturelement umfasst, das ein vernetztes Elastomermaterial einschließt, welches erhältlich ist durch Vernetzen einer vernetzbaren Elastomerzusammensetzung, die folgendes umfasst:
(a) 100 Gew.-Teile mindestens eines Elastomerpolymers;
(b) von 0,1 bis 120 Gew.-Teile mindestens eines verstärkten Füllers;
(c) von 0,01 bis ungefähr 20 Gew.-Teile mindestens eines Oxetanderivats; und
(d) von 0,01 bis ungefähr 10 Gew.-Teile mindestens einer Carbonsäure oder eines Halogenids oder eines Anhydrids davon.

2. Reifen gemäß Anspruch 1, wobei der Reifen folgendes umfasst:
- eine Karkassstruktur einer im wesentlichen toroidalen Gestalt, die gegenüberliegende laterale Ränder aufweist, die mit den jeweiligen rechtsseitigen und linksseitigen Wulststrukturen verbunden sind, und die durch einen jeweiligen Karkassumlauf definiert sind, wobei die Wulststrukturen mindestens einen Wulstkern und mindestens einen Wulstfüller umfassen;
- eine Gürtelstruktur, die in einer radial externen Lage, bezogen auf die Karkassstruktur, eingesetzt ist;
- ein Profilband, das in einer radial externen Lage, bezogen auf die Gürtelstruktur, eingesetzt ist;
- ein Paar Seitenwände, die lateral an gegenüberliegenden Seiten, bezogen auf die Karkassstruktur, eingesetzt sind;
worin das Strukturelement mindestens eines ist aus dem Profilband, dem Paar Seitenwände und dem Wulstfüller.

3. Reifen gemäß Anspruch 2, worin der Reifen weiterhin eine Profilunterschicht umfasst, die in radial interner Lage, bezogen auf das Profilband, eingesetzt ist, worin das Strukturelement die Profilunterschicht ist.

4. Reifen gemäß Anspruch 2 oder 3, worin der Reifen weiterhin ein Paar Seitenwandeinlagen umfasst, die sich radial zwischen den Wulststrukturen und dem entsprechenden lateralen Rand des Profilbands erstreckt, worin das Strukturelement mindestens eines des Paars von Seitenwandeinlagen ist.

5. Reifen gemäß irgendeinem der vorangehenden Ansprüche, worin das Oxetanderivat die folgende allgemeine Formel (I) aufweist: 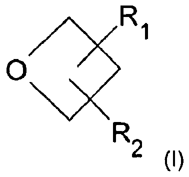 worin
R₁ eine lineare oder verzweigte Alkylgruppe mit 1 bis 6 Kohlenstoffatomen oder eine lineare oder verzweigte Alkylarylgruppe mit 7 bis 12 Kohlenstoffatomen ist und
R₂ eine lineare oder verzweigte Alkylgruppe mit 1 bis 6 Kohlenstoffatomen oder eine lineare oder verzweigte Alkylarylgruppe mit 7 bis 12 Kohlenstoffatomen ist, und wahlweise einen oder mehrere Substituenten umfasst, die ausgewählt sind aus Halogeniden, Hydroxy, Alkoxy, Haloalkoxy, Amino, Nitro, Thio, Cyano, Acyl und Acyloxy.

6. Reifen gemäß Anspruch 5, worin R₁ und R₂ beide mit der dritten Position des Oxetanrings verknüpft sind.

7. Reifen gemäß Anspruch 5, worin R₁ eine lineare oder verzweigt Alkylgruppe mit 1 bis 3 Kohlenstoffatomen oder eine verzweigte Alkylarylgruppe mit 7 bis 9 Kohlenstoffatomen ist und R₂ eine lineare oder verzweigte Alkylgruppe mit 1 bis 3 Kohlenstoffatomen oder eine lineare oder verzweigte Alkylarylgruppe mit 7 bis 9 Kohlenstoffatomen ist, und wahlweise einen oder mehrere Substituenten umfasst, die ausgewählt sind aus Halogeniden, Hydroxy, Alkoxy, Haloalkoxy, Amino, Nitro, Thio, Cyano, Acyl und Acyloxy.

8. Reifen gemäß Anspruch 5, worin das Oxetanderivat ausgewählt ist aus Verbindungen, die in der folgenden Tabelle aufgeführt sind:
| Verbindung | 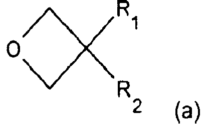 | |
|---|---|---|
| | R₁ | R₂ |
| 1 | -CH₃ | -CH₂OH |
| 2 | -CH₂CH₃ | -CH₂OH |
| 3 | -CH₂CH₂CH₃ | -CH₂OH |
| 4 | - CH₂CH₂ CH₂CH₃ | -CH₂OH |
| 5 | -CH₃ | -CH₂CH₂OH |
| 6 | -CH₂CH₃ | -CH₂CH₂CH₂OH |
| 7 | -CH₂CH₂CH₃ | -CH₂CH₂OH |
| 8 | -CH₃ | -CH₂NH₂ |
| 9 | -CH₂CH₃ | -CH₂NH₂ |
| 10 | -CH₃ | -CH₂Br |
| 11 | -CH₂CH₃ | -CH₂Br |
| 12 | -CH₂CH₂CH₂CH₃ | -CH₂Br |
| 13 | -CH₃ | -CH₂Cl |
| 14 | -CH₂CH₃ | -CH₂Cl |
| 15 | -CH₂CH₂CH₃ | -CH₂Cl |
| 16 | -CH₃ | -CH₂O(CH₂)₄Br |
| 17 | -CH₂CH₃ | -CH₂O(CH₂)₄Br |
| 18 | -CH₃ | -CH₂SH |
| 19 | -CH₂CH₃ | -CH₂SH |
| 20 | -CH₃ | -CH₂CH₂SH |

9. Reifen gemäß irgendeinem der vorhergehenden Ansprüche, worin das Oxetanderivat zu der vernetzbaren Elastomerzusammensetzung in einer Menge im Bereich von 0,1 bis ungefähr 10 Gew.-Teilen hinzugefügt ist.

10. Reifen gemäß irgendeinem der vorhergehenden Ansprüche, worin das Oxetanderivat zu der vernetzbaren Elastomerzusammensetzung ein einer Menge im Bereich von 0,1 bis ungefähr 5 Gew.-Teilen hinzugefügt ist.

11. Reifen gemäß irgendeinem der vorhergehenden Ansprüche, worin die Carbonsäure die folgende allgemeine Formel (II) aufweist: 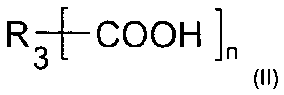 worin
R₃ eine n-valente aliphatische oder aromatische organische Gruppe mit bis zu 24 Kohlenstoffatomen ist und n 1 oder 2 ist und worin das Derivat ausgewählt ist aus Halogeniden und Anhydriden der Carbonsäure mit der allgemeinen Formel (II)

12. Reifen gemäß Anspruch 11, worin R₃ eine n-valente lineare oder verzweigte Alkylgruppe mit bis zu 14 Kohlenstoffatomen, eine n-valente Arylgruppe mit bis zu 20 Kohlenstoffatomen oder eine n-valente lineare oder verzweigte Alkylarylgruppe mit bis zu 24 Kohlenstoffatomen ist.

13. Reifen gemäß irgendeinem der Ansprüche 11 bis 12, worin R₃ einen oder mehrere Substituenten umfasst, die ausgewählt sind aus Hydroxy, Alkoxy, Thio, Dithio, Alkylthio, Alkyldithio.

14. Reifen gemäß irgendeinem der Ansprüche 11 bis 13, worin die Carbonsäure ausgewählt ist aus Essigsäure, Propansäure, Buttersäure, Valeriansäure, Capronsäure, Krotonsäure, Glycolsäure, Thioglycolsäure, Milchsäure, Thiomilchsäure, 3-Hydroxypropansäure, 3-Mercaptopropansäure, Glycerinsäure, 2-Hydroxybuttersäure, 2-Hydroxyisobuttersäure, 3-Hydroxybuttersäure, 4-Hydroxybuttersäure, 2-Mercaptobuttersäure, 2-Mercaptosiobuttersäure, 3-Mercaptoisobuttersäure, 4-Mercaptobuttersäure, Mevalonsäure, Malonsäure, Succininsäure, Citraconsäure, Glutarsäure, Adipinsäure, Weinsäure, Tartranonsäure, Mercaptotartranonsäure, Apfelsäure, Maleinsäure, 2,2'-Dithiodiessigsäure, 3,3'-Dithiopropansäure, 2,2'-Dithiopropansäure, 4,4'-Dithiodibuttersäure, (Ethylendithio)diessigsäure, Mercaptosuccinsäure, Dimercaptosuccinsäure, Benzoesäure, Salicylsäure, 3-Hydroxybenzoesäure, 3-Mercaptobenzoesäure, Thiosalicylsäure, Naphtylsäure, 3-Hydroxy-2-naphtylsäure, 6-Mercapto-2-naphtylsäure, Phthalsäure, Isophthalsäure, Terephthalsäure, 3-Hydroxyphthalsäure, 4-Hydroxyphthalsäure, 3-Mercaptophthalsäure, 4-Mercaptophthalsäure, 2,2'-Dithiosalicylsäure, 2,2'-Dithiobisbenzoesäure, 3,3'-Dithiodibenzoesäure, Phenylessigsäure, Mandelsäure, Thiomandelsäure, Zimtsäure, Hydrozimtsäure, Coumarinsäure, Thiocoumarinsäure, Kaffeesäure, Benzylsäure, Thiobenzylsäure, 1,2-Phenylendiessigsäure, 1,4-Benzoldiessigsäure, p-Phenylendipropansäure, 2,5-Dihydroxy-1,4-benzoldiessigsäure, 2,5-Dimercapto-1,4-benzoldiessigsäue und 4,4'-Dithiobiszimtsäure.

15. Reifen gemäß irgendeinem der vorangehenden Ansprüche, worin die Carbonsäure zu der vernetzbaren Elastomerzusammensetzung in einer Menge von 0,1 bis ungefähr 5 Gew.-Teilen hinzugefügt ist.

16. Reifen gemäß irgendeinem der vorangehenden Ansprüche, worin die Carbonsäure zu der vernetzbaren Elastomerzusammensetzung in einer Menge von 0,2 bis ungefähr 3 Gew.-Teilen hinzugefügt ist.

## Revendications

1. Pneu comportant au moins un élément de structure, comprenant un matériau élastomère réticulé obtenu par réticulation d'une composition d'élastomère réticulable comportant :
(a) 100 pcc d'au moins un polymère élastomère;
(b) de 0,1 pcc à 120 pcc d'au moins une charge de renfort;
(c) de 0,01 pcc à environ 20 pcc d'au moins un dérivé oxétane ; et
(d) de 0,01 pcc à environ 10 pcc d'au moins un acide carboxylique, ou d'un halogènure ou d'un anhydride de celui-ci.

2. Pneu selon la revendication 1, ledit pneu comportant:
- une structure de carcasse de forme sensiblement toroïdale, ayant des bords latéraux opposés associés à des structures de talon à droite et à gauche respectives définies par des rabats de carcasse respectifs, lesdites structures de talon comportant au moins une tringle et au moins un bourrage ;
- une structure de ceinture appliquée dans une position radialement externe par rapport à ladite structure de carcasse ;
- une bande de roulement appliquée dans une position radialement externe par rapport à ladite structure de ceinture ;
- une paire de flancs appliqués latéralement sur des côtés opposés par rapport à la structure de carcasse;
dans lequel ledit élément de structure est au moins un parmi la bande de roulement, la paire de flancs, et le bourrage.

3. Pneu selon la revendication 2, dans lequel le pneu comporte en outre une sous-couche de roulement appliquée dans une position radialement interne par rapport à la bande de roulement, dans lequel ledit élément de structure est la sous-couche de roulement.

4. Pneu selon la revendication 2 ou 3, dans lequel le pneu comporte en outre une paire d'inserts de flanc s'étendant radialement entre chacune des structures de talon et le bord latéral correspondant de la bande de roulement, dans lequel ledit élément de structure est au moins un insert de flanc de la paire d'inserts de flanc.

5. Pneu selon l'une quelconque des revendications précédentes, dans lequel les dérivés oxétane ont la formule générale suivante (I) : 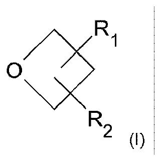 dans laquelle
R₁ est un groupe alkyle linéaire ou ramifié ayant de 1 à 6 atomes de carbone, ou un groupe alkylaryle linéaire ou ramifié ayant de 7 à 12 atomes de carbone, et
R₂ est un groupe alkyle linéaire ou ramifié ayant de 1 à 6 atomes de carbone, ou un groupe alkylaryle linéaire ou ramifié ayant de 7 à 12 atomes de carbone, comportant éventuellement un ou plusieurs substituants sélectionnés dans le groupe des halogénures, hydroxy, alcoxy, haloalcoxy, amino, nitro, thio, cyano, acyle et acyloxy.

6. Pneu selon la revendication 5, dans lequel R₁ et R₂ sont tous les deux liés à la position-3 de l'anneau oxétane.

7. Pneu selon la revendication 5, dans lequel R₁ est un groupe alkyle linéaire ou ramifié ayant de 1 à 3 atomes de carbone ou un groupe alkylaryle ramifié ayant de 7 à 9 atomes de carbone, et R₂ est un groupe alkyle linéaire ou ramifié ayant 1 à 3 atomes de carbone, ou un groupe alkylaryle linéaire ou ramifié ayant de 7 à 9 atomes de carbone, comportant éventuellement un ou plusieurs substituants sélectionnés parmi les halogénures, hydroxy, alcoxy, haloalcoxy, amino, nitro, thio, cyano, acyle et acyloxy.

8. Pneu selon la revendication 5, dans lequel le dérivé oxétane est sélectionné dans le groupe constitué des composés listés dans le tableau suivant :
| Composé | 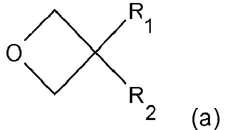 | |
|---|---|---|
| | R₁ | R₂ |
| 1 | -CH₃ | -CH₂OH |
| 2 | -CH₂CH₃ | -CH₂OH |
| 3 | -CH₂CH₂CH₃ | -CH₂OH |
| 4 | -CH₂CH₂ CH₂CH₃ | -CH₂OH |
| 5 | -CH₃ | -CH₂CH₂OH |
| 6 | -CH₂CH₃ | -CH₂CH₂CH₂OH |
| 7 | -CH₂CH₂CH₃ | -CH₂CH₂OH |
| 8 | -CH₃ | -CH₂NH₂ |
| 9 | -CH₂CH₃ | -CH₂NH₂ |
| 10 | -CH₃ | -CH₂Br |
| 11 | -CH₂CH₃ | -CH₂Br |
| 12 | -CH₂CH₂CH₂CH₃ | -CH₂Br |
| 13 | -CH₃ | -CH₂Cl |
| 14 | -CH₂CH₃ | -CH₂Cl |
| 15 | -CH₂CH₂CH₃ | -CH₂Cl |
| 16 | -CH₃ | -CH₂O(CH₂)₄Br |
| 17 | -CH₂CH₃ | -CH₂O(CH₂)₄Br |
| 18 | -CH₃ | -CH₂SH |
| 19 | -CH₂CH₃ | -CH₂SH |
| 20 | -CH₃ | -CH₂CH₂SH |

9. Pneu selon l'une quelconque des revendications précédentes, dans lequel le dérivé oxétane est ajouté à la composition élastomère réticulable dans une quantité allant de 0,1 pcc à environ 10 pcc.

10. Pneu selon l'une quelconque des revendications précédentes, dans lequel le dérivé oxétane est ajouté à la composition élastomère réticulable dans une quantité allant de 0,2 pcc à environ 5 pcc.

11. Pneu selon l'une quelconque des revendications précédentes, dans lequel l'acide carboxylique a la formule générale (II) suivante : 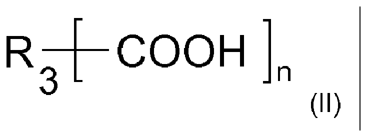 dans laquelle
R₃ est un groupe organique aromatique ou aliphatique n-valent ayant jusqu'à 24 atomes de carbone, et n est 1 ou 2, et dans lequel le dérivé est sélectionné parmi le groupe des halogénures et des anhydrides acide carboxylique ayant la formule générale (II).

12. Pneu selon la revendication 11, dans lequel R₃ est un groupe alkyle n-valent linéaire ou ramifié ayant jusqu'à 14 atomes de carbone, un groupe aryle n-valent ayant jusqu'à 20 atomes de carbone" ou un groupe alkylaryle n-valent linéaire ou ramifié ayant jusqu'à 24 atomes de carbone.

13. Pneu selon la revendication 11 ou 12, dans lequel R₃ comporte un ou plusieurs substituants choisis parmi le groupe des hydroxy, alcoxy, thio, dithio, alkylthio, alkyldithio.

14. Pneu selon l'une quelconque des revendications 11 à 13, dans lequel l'acide carboxylique est choisi parmi le groupe constitué de l'acide acétique, acide propionique, acide butyrique, acide valérique, acide caproïque, acide crotonique, acide glycolique, acide thioglycolique, acide lactique, acide thiolactique, acide 3-hydroxypropionique, acide 3-mercaptopropionique, acide glycérique, acide 2-hydroxybutyrique, acide 2-hydroxyisobutyrique, acide 3-hydroxybutyrique, acide 4-hydroxybutyrique, acide 2-mercaptobutyrique, acide 2-mercaptoisobutyrique, acide 3-mercaptoisobutyrique , acide 4-mercaptobutyrique, acide mévalonique, acide malonique, acide succinique, acide citraconique, acide glutarique, acide adipique, acide tartrique, acide tartronique, acide mercaptotartronique, acide malique, acide maléique, acide 2,2'-dithiodiacetique, acide 3,3'-dithiopropionique, acide 2,2'-dithiopropionique, acide 4,4'-dithiodibutyrique, acide (éthylènedithio)diacétique, acide mercaptosuccinique, acide dimercaptosuccinique, acide benzoïque, acide salicylique, acide 3-hydroxybenzoïque, acide 3-mercaptobenzoïque, acide thiosalicylique, acide naphtoïque, acide 6-hydroxy-2-naphtoïque, acide 6-mercapto-2-naphtoïque, acide phtalique, acide isophtalique, acide téréphtalique, acide 3-hydroxyphthalique, acide 4-hydroxyphthalique, acide 3-mercaptophthalique, acide 4-mercaptophthalique, acide 2,2'-dithiosalicylique, acide 2,2'-dithiobisbenzoïque, acide 3,3'-dithiodibenzoïque, acide phénylacétique, acide mandélique, acide thiomandélique, acide cinnamique, acide hydrocinnamique, acide coumarique, acide thiocoumarique, acide caféique , acide benzilique, acide thiobenzilique, acide 1,2-phénylènediacétique, acide 1,4-benzènediacétique, acide p-phénylènedipropionique, acide 2,5-dihydroxy-1,4-benzènediacétique, azcide 2,5-dimercapto-1,4-benzenediacetique, et acide 4,4'-dithiobiscinnamique.

15. Pneu selon l'une quelconque des revendications précédentes, dans lequel l'acide carboxylique est ajouté à la composition élastomère réticulable dans une quantité allant de 0,1 pcc à environ 5 pcc.

16. Pneu selon l'une quelconque des revendications précédentes, dans lequel l'acide carboxylique est ajouté à la composition élastomère réticulable dans une quantité allant de 0,2 pcc à environ 3 pcc.
